# EUROPEAN PATENT SPECIFICATION

(11) **EP 0 507 569 B1**
(45) Date of publication and mention of the grant of the patent: **05.02.1997**
(21) Application number: 92302869.0
(22) Date of filing: 01.04.1992
(51) Int. Cl.: H02J 7/00, H01M 10/44

(54) **Battery charger with temperature-sensitive cut-out switch**
Batterieladevorrichtung mit temperaturempfindlichem Schalter
Chargeur de batterie contenant un interrupteur sensible à la température

(30) Priority: 05.04.1991 GB 9107102
(43) Date of publication of application: 07.10.1992
(73) Proprietor: Yang, Tai-Her, Si-Hu Town Dzan-Hwa (TW)
(72) Inventor: Yang, Tai-Her, Si-Hu Town Dzan-Hwa (TW)
(74) Representative: Arthur, Bryan Edward

(56) References cited:
- GB-A- 792 971
- US-A- 4 045 720

## Description

The conventional charger involves in a multitude of parts and complex structure so that the production cannot be accomplished at a reasonable cost and reliability. The present invention relates to a battery charger with a temperature control magnetic switch for storage battery coupling with a magnet providing sticking function as operative conditions to form a circuit; when battery is saturated with charging and temperature control magnetic switch trips out the circuit may automatically switch into minor current for sticking to charge, and further by means of attraction provided by the magnet on battery charger to enable temperature control magnetic switch to maintain open circuit until battery is removed from the charger and temperature is so reduced as to reach the condition of restoration for said temperature control magnetic switch. Said minor current for sticking to charge is thus obtained through the constant-closed connections of temperature control magnetic switch being parallel connected limiter resistance.

US patent No. 4 045 720 (Alexandres) discloses an automatically resetting battery charging circuit in that there is a main fast charging circuit and a trickle charging circuit. Initially both the fast charging and trickle charging circuits operate to charge the battery. Most of the charging is carried out by the main charging circuit. Once the battery is almost charged, it begins to heat up. Once the battery has reached a predetermined temperature, a detector, normally a bi-metallic strip, opens to break the main fast charging circuit. The trickle circuit is maintained and continues to top up the battery continuously. As the main charging circuit is broken by the temperature switch the current passing through the trickle circuit increases and this increasing current causes a relay to break the main charging circuit second place so that the battery cools down the main charging circuit is not reconnected. If this relay were not included in the circuit then the bi-metallic switch would close to restart the main charging of the battery. To reset the relay the battery which is being charged is removed from the circuit, which is normally effected by removing a rechargeable power tool from recharging housing, which interrupts the trickle circuit causing the relay to close. The rechargeable tool can then be reinserted into the recharging housing after use in order to receive the recharging current from both the main charging circuit and the trickle charging circuit.

According to the present invention a battery charger has a temperature sensitive cut out switch for cutting off the main charging current when the temperature of the battery exceeds a predetermined temperature, and latching means resettable by the user characterised in that the latching means includes a permanent magnet which tends to maintain the temperature sensitive cut-out switch (207) in the OFF state whilst the temperature of the battery (206) falls below the predetermined temperature, in that the battery charger (201) includes two separate parts, one of said parts including a battery compartment, and the other part being engaged therewith during charging, in that said cut-out switch (207) is located on one of said parts and said magnetic latching means (205) is located on the other of said parts so as to act on the cut-out switch (207) when the two parts are so engaged, whereby said cut-out switch (207) can be re-set by the user disengaging said parts on completion of charging.

Fig. 1 is a diagram showing the circuit of the battery charger with magnet for breaker sticking purpose and having temperature control magnetic switch-based automatic charging cut-off device.

FIG. 2 is a diagramatic view showing the structure of the battery charger with magnet for breaker sticking purpose and having temperature control magnetic switch-based automatic charging cut-off device.

In general the conventional automatic cut-off charger comprising voltage or current detection device being consisted in electronic component assemblies for charging the battery with temperature control switch in order to switch the charger into stick charging at some rated 0.1 C of battery (10% current of rated AH) when battery is saturated with charging or gets rather hot. However, the conventional circuits involve complex parts so that the production cannot be accomplished at reasonable cost.

The present invention relates to a battery charger with a temperature control magnetic switch for storage battery coupling with a magnet providing sticking function as operative conditions to form a circuit; when battery is saturated with charging and temperature control magnetic switch trips out the circuit may automatically switch into minor current for sticking to charge, and further by means of attraction provided by the magnet on battery charger to enable temperature control magnetic switch to maintain open circuit until battery is removed from the charger and temperature is so reduced as to reach the condition of restoration for said temperature control magnetic switch. Said minor current for sticking to charge is thus obtained through the constant-closed connections of temperature control magnetic switch being parallel connected limiter resistance.

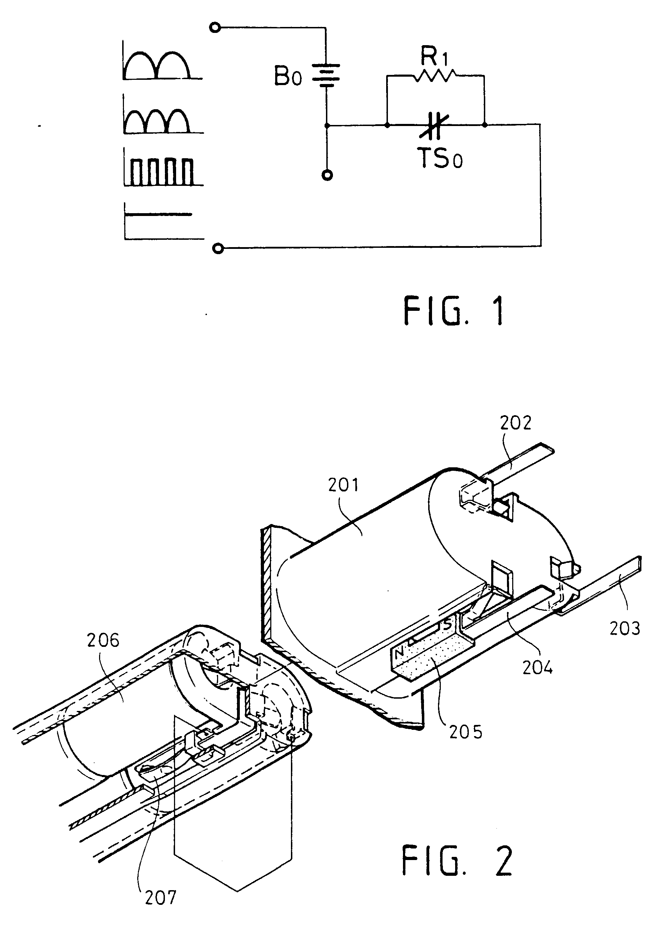

Referring to FIG. 1, it is a diagram showing the circuit of the battery charger with magnet for breaker sticking purpose and having temperature control magnetic switch-based automatic charging cut-off device, comprising:
power supply which is DC, semi-wave DC, full-wave DC, intermittent pulse DC or weeping-wave DC;
chargeable battery B₀ which is built in constant closed temperature control switch TS₀;
choking resistance R1 which is parallel connected to constant-close connections of temperature control magnetic switch for being controlled by temperature control circuit, when the temperature of chargeable battery rises more than preset temperature and temperature control magnetic swtich trips out and gets breaker state, due to the limitation of the value of resistance impedance it can maintain topping charge for chargeable battery, and the attraction of magnet on the battery charger may retain temperature control magnetic switch at open-circuit state until power OFF or battery being removed and the loop being interrupted for restoration.

The conditions for the restoration of said circuit device include:
(1) the temperature of temperature control magnetic switch already reduced to the point of restoration.
(2) battery is removed from the charger and magnet in failure of to attract temperature control magnetic switch.

Referring to FIG. 2, it is a diagrammatic view showing the structure of the battery charger with magnet for breaker sticking purpose and having temperature control magnetic switch-based automatic charging cut-off device, comprising:
a battery charger 201 is an independent structure for engaging chargeable battery and has electrodes corresponding to those of battery and particularly the positive and negative electrode 202, 203 and further including electrode 204 provided for control or indication purpose; said independent structure also including transformer and other elements for commutating, indication and control purpose; a magnet 205 is mounted at battery charger 201 perfectly coupling with temperature control magnetic switch when battery is engaged with the battery charger, and in order to attract the reed of said trip-out temperature control switch due to the sake of temperature rising to enable the reed to appear consistently open-circuit until the temperature drops down and enable the magnet break away from the temperature control magnetic switch;
a chargeable battery 206 accomodates at least one set of battery and includes constant-close type temperature control magnetic switch 207 at a proper position, each PIN of said constant-close type temperature control magnetic switch 207 is parallel connected limiter resistance and display device (in general LED or lamp with limiter).

To conclude above-mentioned descriptions, the present invention relates to connect constant-close temperature switch of chargeable battery with magnet set on the battery charger to apply magnetism to maintain breaker state when temperature control switch trips out due to over-temperature condition in order to enable the circuit to switch into limiting or partly limiting topping charge by means of limiter resistance impedance value when the temperature of chargeable battery is over high whereby chargeable battery is permitted for charging persistantly until it is removed or the temperature of temperature control magnetic switch is reduced to reach the point of restoration.

The invention includes the following preferred features:
1.A battery charger with a temperature control magnetic switch for storage battery coupling with a magnet providing sticking function as operative conductions to form a circuit; when battery is saturated with charging and temperature control magnetic switch trips out the circuit may automatically switch into minor current for sticking to charge, and further by means of attraction provided by the magnet on battery charger to enable temperature control magnetic switch to maintain open circuit until battery is removed from the charger and temperature is so reduced as to reach the condition of restoration for said temperature control magnetic switch. Said minor current for sticking to charge is thus obtained through the constant-closed connections of temperature control magnetic switch being parallel connected limiter resistance.
2.The battery charger with magnet for breaker sticking charge purpose and having temperature control magnetic switch-based automatic charging device according to feature 1 wherein the circuit comprising:
   power supply which is DC, semi-wave DC, full-wave DC, intermittent pulse DC or weeping-wave DC;
   chargeable battery which is built in constant closed temperature control switch;
   choking resistance R1 which is parallel connected to constant-close connections of temperature control magnetic switch for being controlled by temperature control circuit, when the temperature of chargeable battery rises more than preset temperature and temperature control magnetic switch trips out and gets breaker state, due to the limitation of the value of resistance impedance it can maintain topping charge for chargeable battery, and the attraction of magnet on the battery charger may retain temperature control magnetic switch at open-circuit state until power OFF or battery being removed and the loop being interrupted for restoration.

The conditions for the restoration of said circuit device include:
(1) the temperature of temperature control magnetic switch already reduced to the point of restoration.
(2) battery is removed from the charger and magnet in failure of to attract temperature control magnetic switch.
3. The battery charger with magnet for breaker sticking charge purpose and having temperature control magnetic switch-based automatic charging device according to feature 1 wherein the structure comprising:
   a battery charger 201 is an independent structure for engaging chargeable battery and has electrodes corresponding to those of battery and particularly the positive and negative electrode 202, 203 and further including electrode 204 provided for control or indication purpose; said independent structure also including transformer and other elements for commutating, indication and control purpose;
   a magnet 205 is mounted at battery charger 201 perfectly coupling with temperature control magnetic switch when battery is engaged with the battery charger, and in order to attract the reed of said trip-out temperature control switch due to the sake of temperature rising to enable the reed to appear consistently open-circuit until the temperature drops down and enable the magnet break away from the temperature control magnetic switch;
   a chargeable battery 206 accomodates at least one set of battery and includes constant-close type temperature control magnetic switch 207 at a proper position, each PIN of said constant-close type temperature control magnetic switch 207 is parallel connected limiter resistance and display device (in general LED or lamp with limiter).

## Claims

1. A battery charger (201) having a temperature sensitive cut-out switch (207) for cutting off a main charging current when the temperature of the battery (206) exceeds a predetermined temperature, and latching means (205) resettable by the user,
characterised in that the latching means includes a permanent magnet which tends to maintain the temperature sensitive cut-out switch (207) in the OFF state whilst the temperature of the battery (206) falls below the predetermined temperature, in that the battery charger (201) includes two separate parts, one of said parts including a battery compartment, and the other part being engaged therewith during charging, in that said cut-out switch (207) is located on one of said parts and said magnetic latching means (205) is located on the other of said parts so as to act on the cut-out switch (207) when the two parts are so engaged, whereby said cut-out switch (207) can be re-set by the user disengaging said parts on completion of charging.

2. A battery charger (201) according to claim 1 characterised in that said magnetic latching means (205) maintains said cut-out switch (207) in its OFF state at ambient temperature, until re-set by the user.

3. A battery charger (201) according to claims 1 or 2 characterised in that said cut-out switch (207) is bypassed by a current-limiting resistor by which is arranged to deliver a reduced current to the battery (206) which is sufficient to maintain the battery charge whilst the cut-out switch (207) is latched OFF.

## Patentansprüche

1. Batterieladevorrichtung (201) mit einem temperaturempfindlichem Ausschalter (207) zum Abschalten eines Hauptladestroms, wenn die Temperatur der Batterie (206) eine vorbestimmte Temperatur überschreitet, und einer durch den Benutzer zurücksetzbaren Zwischenspeichereinrichtung (205),
**dadurch gekennzeichnet, daß**
die Zwischenspeichereinrichtung einen Permanentmagneten aufweist zum Erhalt des temperaturempfindlichen Ausschalters (207) in dem ausgeschalteten Zustand, solange die Temperatur der Batterie (206) unter die vorbestimmte Temperatur sinkt, daß die Batterieladevorrichtung (201) zwei getrennte Teile aufweist, wobei einer der Teile ein Batteriefach aufweist und der andere Teil während der Ladung mit diesem in Eingriff steht, daß sich der Ausschalter (207) auf einem der Teile befindet und sich die magnetische Zwischenspeichereinrichtung (205) auf dem anderen Teil befindet, damit auf den Ausschalter (207) eingewirkt wird, wenn die beiden Teile miteinander in Eingriff stehen, wodurch der Ausschalter (207) durch das Lösen der Bereiche bei Abschluß der Ladung durch den Benutzer zurückgesetzt werden kann.

2. Batterieladevorrichtung (201) nach Anspruch 1,
**dadurch gekennzeichnet, daß**
die magnetische Zwischenspeichereinrichtung (205) den Ausschalter (207) in dessen ausgeschalteten Zustand bei Umgebungstemperatur bis zu einem Zurücksetzen durch den Benutzer erhält.

3. Batterieladevorrichtung (201) nach Anspruch 1 oder 2,
**dadurch gekennzeichnet, daß**
der Ausschalter (207) mittels eines Strombegrenzungswiderstands umgangen wird, durch den der Batterie (206) ein verringerter Strom zugeführt wird, der zum Erhalt der Batterieladung ausreichend ist, während der Ausschalter (207) im ausgeschalteten Zustand belassen wird.

## Revendications

1. Chargeur de batterie (201) comportant un commutateur de coupure (207) sensible à la température pour couper un courant de charge principal lorsque la température de la batterie (206) dépasse une température prédéterminée, et des moyens de verrouillage (205) pouvant être réarmés par l'utilisateur,
caractérisé en ce que les moyens de verrouillage comprennent un aimant permanent qui tend à maintenir le commutateur (207) de coupure sensible à la température dans l'état arrêt (OFF) tant que la température de la batterie (206) se situe en-dessous de la température prédéterminée, en ce que le chargeur de batterie (201) comprend deux parties séparées, une desdites parties comprenant un compartiment de batterie, et l'autre partie étant engagée avec lui lors de la charge, en ce que ledit commutateur (207) de coupure est logé sur l'une desdites parties et ledit moyen de verrouillage magnétique (205) est logé sur l'autre desdites parties, de façon à agir sur ledit commutateur de coupure (207) lorsque les deux parties sont ainsi engagées, grâce à quoi ledit commutateur de coupure peut être réarmé par l'utilisateur par désengagement desdites parties après achèvement de l'opération de charge.

2. Chargeur de batterie (201) selon la revendication 1, caractérisé en ce que ledit moyen de verrouillage magnétique (205) maintient ledit commutateur de coupure (207) dans son état arrêt (OFF) à température ambiante, jusqu'à réarmement par l'utilisateur.

3. Chargeur de batterie (201) selon les revendications 1 ou 2, caractérisé en ce que ledit commutateur de coupure (207) est court-circuité par une résistance de limitation de courant au moyen de laquelle est assurée la fourniture d'un courant réduit à la batterie (206) lequel est suffisant pour maintenir la charge de la batterie lorsque le commutateur de coupure (207) est verrouillé dans sa position arrêt (OFF).
